# EUROPÄISCHE PATENTANMELDUNG

(11) **EP 4 792 629 A1**
(43) Veröffentlichungstag der Anmeldung: **19.08.2026**
(21) Anmeldenummer: 25222235.1
(22) Anmeldetag: 10.12.2025
(51) Int. Cl.: A01B 17/00

(54) **PFLUG UND VERFAHREN ZUM PFLÜGEN**

(30) Priorität: 28.01.2025 DE 102025103006
(71) Anmelder: Kverneland Group Operations Norway AS, 4353 Klepp Stasjon (NO)
(72) Erfinder: ERGA, Arin, Klepp Stasjon (NO); KRAGGERUD, Per Gunnar, Klepp Stasjon (NO); OLSEN, Sigmund, Klepp Stasjon (NO); SIGMUNDSTAD, Stian, Klepp Stasjon (NO); BRYNE, Björn, Klepp Stasjon (NO)
(74) Vertreter: Schlegel, Sebastian

(57) **Zusammenfassung**

Die Erfindung betrifft einen Pflug (1) und ein Verfahren zum Pflügen. Der Pflug (1) weist einen Rahmenbalken (2), dessen Längsrichtung sich quer zu einer Fahrt- oder Arbeitsrichtung erstreckt, und Pflugwerkzeugpaaren (3.1, ..., 3.4) auf, die in Längsrichtung des Rahmenbalkens (2) nebeneinander angeordnet sind. Bei den Pflugwerkzeugpaaren (3.1, ..., 3.4) ist jeweils Folgendes vorgesehen: ein Pflugschar-Werkzeug (4), das über einen Pflugbalken mit dem Rahmenbalken (2) verbunden und betreibbar ist, im Pflugbetrieb beim Ausbilden einer Furche im Erdboden einen Bodenbalken zu trennen, aufzunehmen, zu wenden und in einer Verlagerungsrichtung quer zur Fahr- oder Arbeitsrichtung seitlich zu verlagern; ein dem Pflugschar-Werkzeug (4) zugeordnetes Zusatzpflugschar-Werkzeug (5), das über einen Zusatzpflugbalken (7) mit dem Rahmenbalken (2) verbunden und betreibbar ist, im Pflugbetrieb den von der Pflugschar-Werkzeug (4) aufgenommenen und gewendeten Bodenbalken entgegengesetzt zur Verlagerungsrichtung quer zur Fahrt- oder Arbeitsrichtung seitlich zu verlagern; und eine der Pflugschar-Werkzeug (4) zugeordnete Sech, die dem Pflugschar-Werkzeug (4) in Fahrt-oder Arbeitsrichtung vorgelagert und betreibbar ist, einen vertikalen Bodenschnitt für den Bodenbalken herzustellen.

## Beschreibung

Die Erfindung betrifft einen Pflug sowie ein Verfahren zum Pflügen mit einem Pflug.

### Hintergrund

Pflüge dienen in der Landwirtschaft zur Bodenbearbeitung von landwirtschaftlichen Nutzflächen. Der Pflug verfügt regelmäßig über mehrere Pflugwerkzeuge, die an einem Rahmenbalken angeordnet sind. Der Rahmenbalken kann sich hierbei längs einer Fahrt- oder Arbeitsrichtung, quer hierzu oder einem beliebigen Winkel hierzu erstrecken. Pflüge, bei denen die Pflugwerkzeuge entlang eines sich quer zur Fahrt- oder Arbeitsrichtung erstreckenden Rahmenbalkens nebeneinander angeordnet sind, werden auch als Parallelpflug bezeichnet.

Das Dokument DD 289 189 A5 offenbart einen Pflug mit im Wesentlichen quer zur Arbeitsrichtung angeordneten Pflugwerkzeugen zum Bearbeiten landwirtschaftlicher Nutzflächen. Der bekannte Pflug weist im Wesentlichen quer zur Arbeitsrichtung angeordnete Werkzeugeinheiten auf, die aus der Kombination eines Schar-Streichblech-Werkzeugs mit einem Schar-Abweiser-Werkzeug bestehen, welche im Wechsel an einem Werkzeugquerträger, der vom Rahmenbalken gebildet wird, befestigt sind und aufeinander zuarbeitend einerseits einen Bodenbalken waagerecht trennen, aufnehmen seitlich verlagern und wenden, andererseits den benachbarten Bodenbalken waagerecht trennen und seitlich verschieben ohne ihn zu wenden. Das Schar-Streichblech-Werkzeug ist gegenüber der Schar des Schar-Abweiser-Werkzeugs um etwa eine Scharschnittbreite zurückversetzt angeordnet, und der Abweiser des Schar-Abweiser-Werkzeugs ist getrennt von seiner zugehörigen Schar gleichfalls bis auf die Höhe des Schar-Streichblech-Werkzeugs zurückversetzt angeordnet.

Im Dokument EP 2 949 192 A1 ist ein Pflug mit mehreren an einem Rahmenbalken angebrachten Pflugkörpern beschrieben, wobei der Rahmenbalken rechtwinklig zur Arbeitsrichtung des Pfluges ausgerichtet ist und wobei die Pflugkörper zum Pflügen eines Bodens nebeneinander am Pflugbalken angeordnet sind. Bei dem Pflug ist jeder Pflugkörper ein einheitliches Bauteil und weist die Form eines in einer vertikalen Ebene in Längsrichtung halbierten Rohres mit vorne und hinten schräg verlaufenden Kanten auf, wobei jeweils die Längsachsen der Pflugkörper parallel zueinander schräg zur Arbeitsrichtung des Pfluges ausgerichtet sind.

### Zusammenfassung

Aufgabe der Erfindung ist es, einen Pflug sowie ein Verfahren zum Pflügen mit einem Pflug anzugeben, mit denen ein im Pflugbetrieb (Pflügen) vom Erdboden in einer Furche getrennter Bodenbalken mit Hilfe von Pflugwerkzeugen des Pflugs auf effiziente Art und Weise aufgenommen, gewendet und in der Furche als gewendeter Bodenbalken zur Ablage gebracht werden kann. Ein Bodenschnitt im Erdboden soll eine effiziente und saubere Ausbildung des Bodenbalkens unterstützen.

Zur Lösung sind ein Pflug sowie ein Verfahren zum Pflügen mit einem Pflug nach den unabhängigen Ansprüchen 1 und 15 geschaffen. Ausgestaltungen sind Gegenstand von abhängigen Unteransprüchen.

Nach einem Aspekt ist ein Pflug mit einem Rahmenbalken, dessen Längsrichtung sich quer zu einer Fahrt- oder Arbeitsrichtung erstreckt, und Pflugwerkzeugpaaren geschaffen, die in Längsrichtung des Rahmenbalkens nebeneinander angeordnet sind. Bei den Pflugwerkzeugpaaren ist jeweils Folgendes vorgesehen: ein Pflugschar-Werkzeug, das über einen Pflugbalken mit dem Rahmenbalken verbunden und betreibbar ist, im Pflugbetrieb beim Ausbilden einer Furche im Erdboden einen Bodenbalken zu trennen, aufzunehmen, zu wenden und in einer Verlagerungsrichtung quer zur Fahr- oder Arbeitsrichtung seitlich zu verlagern; ein dem Pflugschar-Werkzeug zugeordnetes Zusatzpflugschar-Werkzeug, das über einen Zusatzpflugbalken mit dem Rahmenbalken verbunden und betreibbar ist, im Pflugbetrieb den von der Pflugschar-Werkzeug aufgenommenen und gewendeten Bodenbalken entgegengesetzt zur Verlagerungsrichtung quer zur Fahrt- oder Arbeitsrichtung seitlich zu verlagern; und eine der Pflugschar-Werkzeug zugeordnete Sech, die dem Pflugschar-Werkzeug in Fahrt- oder Arbeitsrichtung vorgelagert und betreibbar ist, einen vertikalen Bodenschnitt für den Bodenbalken herzustellen.

Nach einem weiteren Aspekt ist ein Verfahren zum Pflügen mit einem Pflug geschaffen, wobei bei dem Pflug an einem Rahmenbalken, dessen Längsrichtung sich quer zu einer Fahrt- oder Arbeitsrichtung erstreckt, Pflugwerkzeugpaare in Längsrichtung des Rahmenbalkens nebeneinander angeordnet sind, die jeweils mit einem Pflugschar-Werkzeug, einem dem Pflugschar-Werkzeug zugeordneten Zusatzpflugschar-Werkzeug sowie einer Sech gebildet sind. Das Verfahren weist Folgendes auf: Schneiden eines vertikalen Bodenschnitts für einen Bodenbalken mittels der Sech, die dem Pflugschar-Werkzeug zugeordnet und in Fahr- oder Arbeitsrichtung vorgelagert ist; Trennen des Bodenbalkens vom Erdboden zum Ausbilden einer Furche im Erdboden sowie Aufnehmen, Wenden und seitliches Verlagern des Bodenbalkens quer zur Fahr- oder Arbeitsrichtung mittels des Pflugschar-Werkzeugs, das über einen Pflugbalken mit dem Rahmenbalken verbunden ist; und seitliches Verlagern des von dem Pflugschar-Werkzeug aufgenommenen und gewendeten Bodenbalkens entgegengesetzt zur Verlagerungsrichtung quer zur Fahrt- oder Arbeitsrichtung mittels des Zusatzpflugschar-Werkzeugs, derart, dass der gewendete Bodenbalken in der Furche abgelegt wird.

Bei dem Pflug wirken die mit Pflugschar-Werkzeug und Zusatzpflugschar-Werkzeug gebildeten Pflugwerkzeugpaare effizient zusammen, um beim Pflügen den jeweiligen Boden- oder Erdbalken vom Erdboden zu trennen, aufzunehmen und zu wenden, insbesondere um 180 Grad. Hierbei wirkt das Zusatzpflugschar-Werkzeug einer von dem Pflugschar-Werkzeug ausgelösten Verlagerung des aufgenommen Bodenbalkens quer zur Fahrt- oder Arbeitsrichtung und von dem Pflugschaar-Werkzeug weg entgegen, so dass der gewendete Bodenbalken schließlich in der dem Bodenbalken zugeordneten Furche gewendet zur Ablage kommt. Der Bodenbalken kann somit in dem Bereich der Furche abgelegt werden, in welchem er zuvor vom Erdboden getrennt wurde.

Mit Hilfe der dem Pflugschar-Werkzeug zugeordneten und diesem in Fahrt- oder Arbeitsrichtung vorgelagerten Sech ist vor dem Trennen des Bodenbalkens vom Erdboden durch das Pflugschar-Werkzeug ein vertikaler Bodenschnitt für den Bodenbalken und die Furche hergestellt, so dass der Bodenbalken dann mittels des Pflugschar-Werkzeugs mit einer sauberen Schnittfläche entlang des vertikalen Bodenschnitts vom Erdboden getrennt werden kann. Es kann vorgesehen sein, dass die Sech betreibbar ist, den vertikalen Bodenschnitt im Erdboden bis zu einer Tiefe auszubilden, in welcher sich anschließend eine Scharspitze einer Schar des Pflugschar-Werkzeugs in Fahrt- oder Arbeitsrichtung vorwärts bewegt.

Pflugschar-Werkzeug und / oder Zusatzpflugschar-Werkzeug können jeweils lösbar an dem Rahmenbalken des Pflugs montiert sein, wobei der Rahmenbalken in den verschiedenen Ausführungsformen mit einem Rahmenteil eines Rahmens des Pfluges gebildet sein kann. Mit dem Rahmenbalken ist ein Werkzeugträger für die Pflugwerkzeugpaare mit Pflugschar-Werkzeug und Zusatzpflugschar-Werkzeug gebildet.

Der Pflugbalken, über den das Pflugschar-Werkzeug an dem Rahmenbalken angeordnet ist, kann mit Blick von der Seite auf den Pflug mit einer C-Balkenform gebildet sein.

Mittels der Anordnung der Pflugwerkzeugpaare in Längsrichtung des Rahmenbalkens, welches sich seinerseits quer zur Fahrt- oder Arbeitsrichtung erstreckt, ist ein Parallelpflug ausgebildet.

Es kann eine Zusatzsech vorgesehen sein, die dem Zusatzpflugschar-Werkzeug zugeordnet und dieser in Fahrt- oder Arbeitsrichtung vorgelagert und betreibbar ist, einen gegenüberliegenden vertikalen Bodenschnitt für den Bodenbalken herzustellen. Mit Hilfe der Zusatzsech wird für den Bodenbalken auch auf der gegenüberliegenden Seite ein vertikaler Bodenschnitt hergestellt, was anschließend das effiziente und saubere Trennen des Bodenbalkens vom Erdboden unterstützt. Es kann vorgesehen sein, dass vertikaler Bodenschnitt und gegenüberliegender vertikaler Bodenschnitt mit im Wesentlichen gleicher Tiefe im Erdboden hergestellt werden. Eine Scharspitze einer Schar des Zusatzpflugschar-Werkzeugs kann sich im Pflugbetrieb entlang des gegenüberliegenden vertikalen Bodenschnitts oder benachbart hierzu bewegen.

Eine Schneidkante der Sech, die beim Ausbilden des vertikalen Bodenschnitts den Erdboden schneidet, kann gegenüber einer Schneidkante der Zusatzsech, die beim Ausbilden des gegenüberliegenden vertikalen Bodenschnitts den Erdboden schneidet, in Fahrt- oder Arbeitsrichtung zurückversetzt sein. Die Schneidkante der Zusatzsech ist hierbei in Fahrt- oder Arbeitsrichtung gegenüber der Schneidkante der Sech vorlaufend angeordnet, wobei Sech und Zusatzsech dem Ausbilden des jeweiligen vertikalen Bodenschnitts dienen. Mit Blick von der Seite auf den Pflug kann die Sech mit einem oder mehreren der folgenden Bauteile oder Komponenten nicht überlappend angeordnet sein: Zusatzsech, Pflugbalken und Zusatzpflugbalken. Zum Beispiel ist die Sech mit Blick von der Seite auf die Pflugwerkzeugpaare unterhalb eines Abschnitts des Pflugbalkens des zugeordneten oder aller Pflugschar-Werkzeuge angeordnet.

Die Sech und / oder die Zusatzsech können mit mindestens einer Sech aus der folgenden Gruppe gebildet sein: Schneidscheiben-Sech und Schneidmesser-Sech. Die Schneidscheiben-Sech kann mit einer drehbaren Schneidscheibe ausgeführt sein. Das Schneidmesser-Sech kann eine gerade oder eine gekrümmte Schneidkante aufweisen.

Die Sech kann mit einer Schneidscheiben-Sech gebildet sein, welche über eine zugeordnete Halteinrichtung mit dem Pflugbalken verbunden ist. Die Sech kann bei dieser oder anderen Ausführungsformen relativ zur Scharspitze der Schar des Pflugschar-Werkzeugs verlagerbar sein, insbesondere hinsichtlich einer Höhe über der Scharspitze. Die Schneidscheibe kann mit Blick von vorn auf den Pflug im Wesentlichen aufrechtstehend angeordnet sein.

Die Zusatzsech kann eine an dem Zusatzpflugbalken angeordnete Schneidmesser-Sech aufweisen. Die Zusatzsech kann an dem Zusatzpflugbalken lösbar montiert sein. Es kann vorgesehen sein, dass die Zusatzsech einstellbar ausgeführt ist. Mit Blick von vorn auf die Pflugwerkzeugpaare kann das Schneidmesser im Wesentlichen aufrechtstehend ausgerichtet sein. Insbesondere kann eine Schneidkante des Schneidmessers im Wesentlichen in Vertikalrichtung verlaufen. Die Schneidkante des Schneidmessers ist mit Blick von der Seite auf die Pflugwerkzeugpaare in Fahrt- oder Arbeitsrichtung vor der Scharspitze der Schar des Zusatzpflugschar-Werkzeugs angeordnet. Auch kann vorgesehen sein, dass Schneidkante des Schneidmessers mit Blick von der Seite auf die Pflugwerkzeugpaare in Fahrt- oder Arbeitsrichtung vor der Schneidkante der Sech angeordnet ist.

Die Schneidmesser-Sech kann mit dem Zusatzpflugbalken integriert ausgebildet sein, derart, dass eine Schneidkante der Schneidmesser-Sech an einem Balkenabschnitt des Zusatzpflugbalkens gebildet ist. Das Schneidmesser kann einstückig mit dem Balkenabschnitt des Zusatzpflugbalkens ausgebildet sein. In einer Ausgestaltung ist das Schneidmesser lösbar an dem Balkenabschnitt angeordnet, was insbesondere ein Trennen des Schneidmessers vom Balkenabschnitt zur Wartung oder zum Austausch ermöglicht. Der Balkenabschnitt, an welchem das Schneidmesser der Zusatzsech gebildet ist, kann über einen benachbarten Balkenabschnitt mit dem Rahmenbalken verbunden sein, sei es einstückig oder trennbar.

Eine Schneidkante der Zusatzsech kann mit Blick von der Seite auf die Pflugwerkzeugpaare zur Vertikalrichtung geneigt sein, und eine bodenseitige Schneidspitze der Zusatzsech kann in Fahrt- oder Arbeitsrichtung vorauseilend angeordnet sein, insbesondere derart, dass die Schneidkante der Zusatzsech beim Blick von der Seite auf die Pflugwerkzeugpaare in Fahrt- oder Arbeitsrichtung hinter der bodenseitige Schneidspitze angeordnet ist. Die Schneidkante kann als gerade oder gekrümmte Schneidkante ausgeführt sein. Ein Neigungswinkel für die Neigung der Schneidkante relativ zur Vertikalrichtung kann im Bereich von größer 0 Grad bis etwa 30 Grad liegen, insbesondere im Bereich von etwa 20 Grad bis etwa 30 Grad, beispielsweise etwa 25 Grad betragen.

Der Zusatzpflugbalken kann mit Blick von der Seite auf die Pflugwerkzeugpaare oder den Pflug einen im Wesentlichen in Horizontalrichtung verlaufenden Balkenabschnitt aufweisen, an dessen rückseitigem Ende das Zusatzpflugschar-Werkzeug angeordnet ist. Der im Wesentlichen in Horizontalrichtung verlaufende Balkenabschnitt, welcher sich zum Beispiel in Fahrt- oder Arbeitsrichtung erstreckt, kann an einen Balkenabschnitt des Zusatzpflugbalkens rückseitig anschließen, an welchem die bodenseitige Schneidspitze der Zusatzsech angeordnet ist. Der im Wesentlichen im Horizontalrichtung verlaufende Balkenabschnitt kann einstückig an den Balkenabschnitt mit dem Schneidmesser angeformt sein.

Es kann vorgesehen sein, dass der im Wesentlichen in Horizontalrichtung verlaufende Balkenabschnitt zusammen oder gemeinsam mit dem Balkenabschnitt, an dem das Schneidmesser gebildet ist, demontierbar oder abnehmbar ist. Das Zusatzpflugschar-Werkzeug kann an dem im Wesentlichen in Horizontalrichtung verlaufenden Balkenabschnitt einstückig angeformt sein. Alternativ kann vorgesehen sein, dass das Zusatzpflugschar-Werkzeug lösbar mit dem Balkenabschnitt in Horizontalrichtung ausgebildet ist.

Eine Scharspitze einer Schar des Zusatzpflugschar-Werkzeugs kann einem in Fahrt- oder Arbeitsrichtung rückseitigen Scharende einer Schar des Pflugschar-Werkzeugs gegenüberliegend oder benachbart hierzu angeordnet sein. Hierbei können die Scharspitze der Schar des Zusatzpflugschar-Werkzeugs und das rückseitige Scharende der Schar des Pflugschar-Werkzeugs im Wesentlichen auf einer Anordnungslinie quer zur Fahrt- oder Arbeitsrichtung angeordnet sein, wobei die Anordnungslinie im Wesentlichen parallel zum Rahmenbalken verlaufen kann.

Ein vertikaler Abstand einer Scharspitze der Schar des Pflugschar-Werkzeugs von einem oberen Horizontalabschnitt des Pflugbalkens kann etwa 40 cm bis etwa 90 cm betragen. Der vertikale Abstand der Scharspitze der Schar des Pflugschar-Werkzeugs von dem oberen Horizontalabschnitt des Pflugbalkens kann insbesondere etwa 75 cm bis etwa 85 cm betragen, zum Beispiel etwa 80 cm.

Ein horizontaler Abstand eines hinteren Vertikalabschnitts des Pflugbalkens von einem vorderen Vertikalabschnitt des Zusatzpflugbalkens kann etwa 60 cm bis etwa 90 cm betragen. Der horizontale Abstand des hinteren Vertikalabschnitts des Pflugbalkens von dem vorderen Vertikalabschnitt des Zusatzpflugbalkens kann insbesondere 65 cm bis etwa 85 cm betragen. Hierbei kann der horizontale Abschnitt insbesondere zwischen einander gegenüberliegenden Balkenseiten des hinteren Vertikalabschnitts des Pflugbalkens und dem vorderen Vertikalabschnitt des Zusatzpflugbalkens ausgebildet sein.

In der Fahrt- oder Arbeitsrichtung kann ein Spitzenabstand zwischen der Scharspitze der Schar des Pflugschar-Werkzeugs und der Scharspitze der Schar des Zusatzpflugschar-Werkzeugs etwa 40 cm bis etwa 120 cm betragen. Der Spitzenabstand zwischen der Scharspitze der Schar des Pflugschar-Werkzeugs und der Scharspitze der Schar des Zusatzpflugschar-Werkzeugs kann in Fahrt- oder Arbeitsrichtung etwa 70 cm bis etwa 110 cm betragen, beispielsweise etwa 80 cm bis etwa 100 cm.

Zumindest bei einem oder bei mehreren mittleren der Pflugwerkzeugpaare können das Pflugschar-Werkzeug und das Zusatzpflugschar-Werkzeug jeweils paarweise benachbart zueinander in einer V-Anordnung angeordnet sein, derart, dass Scharspitzen der Schare benachbarter Pflugschar-Werkzeuge einerseits und Scharspitzen der Schare benachbarter Zusatzpflugschar-Werkzeuge andererseits jeweils eine gemeinsame Paarscharspitze bilden.

Die Scharspitzen der benachbarten Werkzeuge können aneinanderstoßend angeordnet sein. Die paarweise benachbart zueinander angeordneten Werkzeuge können einstückig oder getrennt ausgebildet sein, wobei vorgesehen sein kann, dass benachbarte Pflugschar-Werkzeuge und / oder benachbarte Zusatzpflugschar-Werkzeuge voneinander trennbar und vom zugehörigen Pflugbalken lösbar sind. Bezüglich der mittleren der Pflugwerkzeugpaare ergibt sich eine abwechselnde Anordnung von zwei Pflugschar-Werkzeugen und zwei Zusatzpflugschar-Werkzeugen in Längsrichtung des Rahmenbalkens. Endseitig der Anordnung von Pflugwerkzeugpaaren kann ein einzelnes Pflugschar-Werkzeug vorgesehen sein, welches den getrennten und aufgenommenen Bodenbalken zu den mittleren Pflugwerkzeugpaaren hin wendet. Die paarweise benachbart zueinander in der V-Anordnung angeordneten Pflugschar-Werkzeuge wenden den jeweiligen Bodenbalken zu entgegengesetzten Horizontalrichtungen hin, also entgegengesetzt in Richtung quer zur Fahrt- oder Arbeitsrichtung. Dementsprechend wirken paarweise benachbart zueinander angeordnete Zusatzpflugschar-Werkzeuge ebenso in entgegengesetzte Verlagerungsrichtungen.

Bei einer Landmaschine kann der Pflug auf einem Anhängefahrzeug an einem Schlepper angeordnet sein. Alternativ wird der Pflug von dem Schlepper getragen. Auch ein selbstfahrender Pflug kann vorgesehen sein.

In Verbindung mit dem Verfahren zum Pflügen mit dem Pflug können die im Zusammenhang mit dem Pflug vorangehend erläuterten Ausgestaltungen entsprechend vorgesehen sein.

### Beschreibung von Ausführungsbeispielen

Im Folgenden werden weitere Ausführungsbeispiele unter Bezugnahme auf Figuren einer Zeichnung erläutert. Hierbei zeigen:
- Fig. 1: eine schematische perspektivische Darstellung eines Pflugs von schräg hinten;
- Fig. 2: eine schematische perspektivische Darstellung des Pflugs auf Fig. 1 von schräg vorn;
- Fig. 3: eine schematische Darstellung des Pflugs aus Fig. 1 von oben;
- Fig. 4: eine schematische Teildarstellung des Pflugs aus Fig. 1 von der Seite und
- Fig. 5: eine schematische Schnittdarstellung eines Erdbodens mit Furche und Bodenbalken.

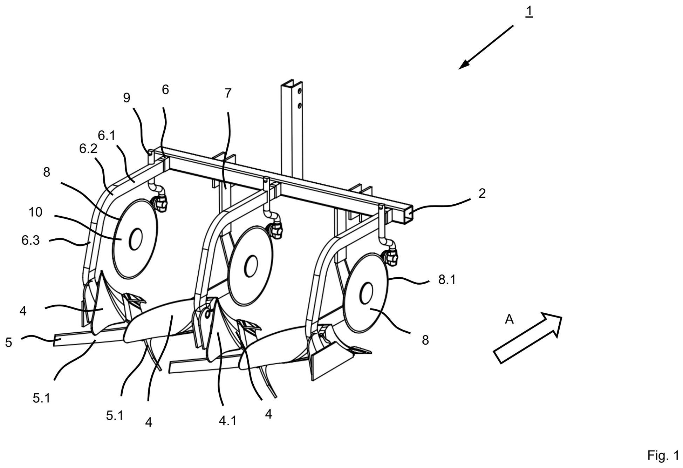

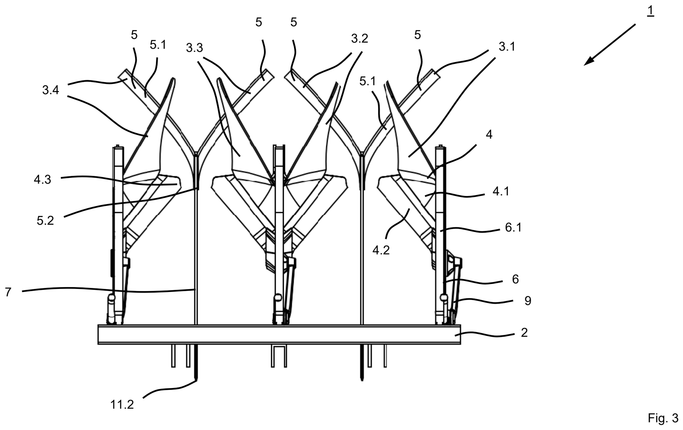

Fig. 1 bis 4 zeigen schematische Darstellungen eines Pflugs 1 zur Bodenbearbeitung landwirtschaftliche Nutzfläche. Bei dem Pflug 1 erstreckt sich ein einen Werkzeugträger bildender Rahmenbalken 2 im Wesentlichen quer zu einer Fahrt- oder Arbeitsrichtung A. An dem Rahmenbalken 2 sind in Längsrichtung nebeneinander Pflugwerkzeugpaare 3.1, ..., 3.4 angeordnet (vgl. insbesondere Fig. 3). Ein erstes Pflugwerkzeugpaar 3.1, wie auch die übrigen Pflugwerkzeugpaare 3.2, ...,3.4, weisen jeweils ein Pflugschar-Werkzeug 4 sowie ein zugeordnetes Zusatzpflugschar-Werkzeug 5 auf. Das Pflugschar-Werkzeug 4 ist mit einem Streichblech 4.1 sowie einer Schar 4.2 gebildet. Das zugeordnete Zusatzpflugschar-Werkzeug 5 weist eine Schar 5.1 auf. Vergleichbar sind das Pflugschar-Werkzeug 4 und das Zusatzpflugschar-Werkzeug 5 der weiteren Pflugwerkzeugpaare 3.2, 3.3, 3.4 ausgebildet.

Eine Scharspitze 5.2 der Schar 5.1 des Zusatzpflugschar-Werkzeugs 5 ist jeweils einem rückseitigen Scharende 4.3 der Schar 4.2 des zugeordneten Pflugschar-Werkzeugs 4 gegenüberliegend oder benachbart hierzu angeordnet, derart, dass die Scharspitzen 5.2 der Zusatzpflugschar-Werkzeuge 5 und die rückseitigen Scharenden 4.3 der Pflugschar-Werkzeuge 4 im Wesentlichen mit gleichem Abstand von dem Rahmenbalken 2 angeordnet sind, somit im Wesentlichen auf einer Anordnungslinie liegen, die parallel zum Rahmenbalken 2 verläuft.

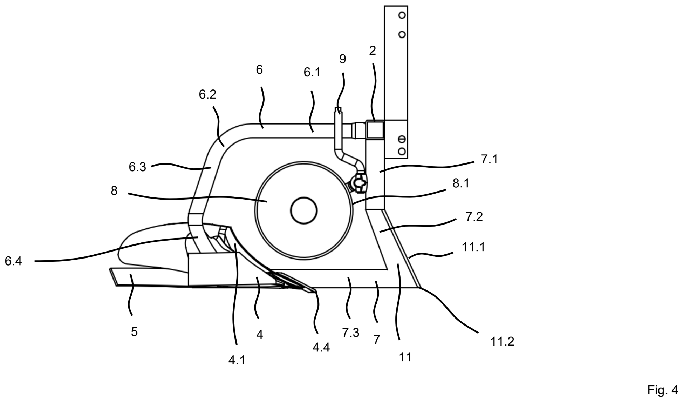

Gemäß Fig. 1 ist das Pflugschar-Werkzeug 4 über einen Pflugbalken 6 an dem Rahmenbalken 2 angeordnet, sei es lösbar oder nicht lösbar. Der Pflugbalken 6 ist in dem gezeigten Ausführungsbeispiel mit einem im Wesentlichen in Horizontalrichtung verlaufenden Balkenabschnitt 6.1 (Horizontalabschnitt) gebildet, welcher rückseitig über einen Balkeneckbereich 6.2 in einen im Wesentlichen in Vertikalrichtung verlaufenden Balkenabschnitt 6.3 (Vertikalabschnitt) übergeht. An diesen schließt sich gem. Fig. 4 endseitig ein nach vorn zum Rahmenbalken 2 hin geneigter Balkenabschnitt 6.4, an welchem das Pflugschar-Werkzeug 4 angeordnet ist. Auf diese Weise ist der Pflugbalken 6 im gezeigten Beispiel mit einer C-Balkenform ausgebildet. Andere Balkenformen sind möglich. Der Pflugbalken 6 kann ein- oder mehrstückig ausgeführt sein und kann an dem Rahmenbalken 2 fest oder lösbar montiert sein.

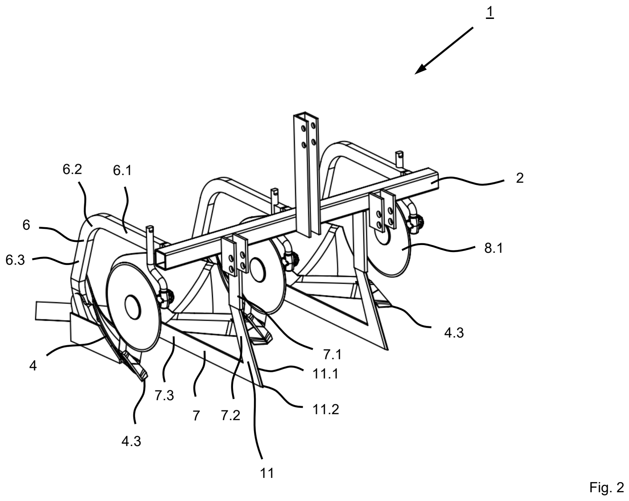

Das Zusatzpflugschar-Werkzeug 5 ist über einen zugeordneten Zusatzpflugbalken 7 mit dem Rahmenbalken 2 verbunden. Wie sich insbesondere aus Fig. 2 ergibt, umfasst der Zusatzpflugbalken 7 bei den gezeigten Ausführungsbeispielen einen vorderen im Wesentlichen in Vertikalrichtung verlaufenden Balkenabschnitt 7.1 (Vertikalabschnitt), welcher mit dem Rahmenbalken 2 verbunden ist, sowie einen hierzu benachbarten Balkenabschnitt 7.2, der gegenüber dem Balkenabschnitt 7.1 in Fahrt- oder Arbeitsrichtung A nach vorn geneigt ist. An den nach vorn geneigten Balkenabschnitt 7.2 schließt sich ein horizontaler Balkenabschnitt 7.3 an, an dem endseitig das Zusatzpflugschar-Werkzeug 5 angeordnet ist (vgl. Fig. 1). Der Zusatzpflugbalken 7 kann ein- oder mehrstückig ausgeführt sein. Das Zusatzpflugschar-Werkzeug 5 kann an dem horizontalen Balkenabschnitt 7.3 lösbar oder nicht lösbar verbunden sein. Alternativ oder ergänzend kann der Balkenabschnitt 7.2 mit dem vorderen im Wesentlichen in Vertikalrichtung verlaufenden Balkenabschnitt 7.1 lösbar oder nicht lösbar verbunden sein.

Dem Pflugschar-Werkzeug 4 ist bei den Pflugwerkzeugpaaren 3.1, ..., 3.4 jeweils eine Sech 8 zugeordnet, die mittels einer Halteeinrichtung 9 an dem zugeordneten Pflugbalken 6 gehalten wird. Die Halteeinrichtung 9 kann eingerichtet sein, eine Stellung der Sech 8 relativ zum zugeordneten Pflugschar-Werkzeug 4 und somit relativ zu einer Scharspitze 4.4 der Schar 4.2 des Pflugschar-Werkzeugs 4 einzustellen. Im gezeigten Ausführungsbeispiel ist die Sech 8 mit einer jeweiligen Schneidscheiben 10 gebildet.

Wie insbesondere aus Fig. 2 ersichtlich ist an dem Zusatzpflugbalken 7 eine Zusatzsech 11 in dem nach vorn geneigten Balkenabschnitt 7.2 vorgesehen, derart, dass eine Schneidkante 11.1 der Zusatzsech 11, die im gezeigten Beispiel als gerade Schneidkante ausgeführt ist, ebenfalls schräg nach vorn verläuft bis hin zu einer Schneidspitze 11.2. Die Zusatzsech 11 ist dem in Bezug auf die Zusatzsech 11 in Fahrt- oder Arbeitsrichtung A dahinterliegenden Zusatzpflugschar-Werkzeug 5 zugeordnet. Die Schneidspitze 11.2 der Zusatzsech 11 ist einer vorderen Schneidkante 8.1 der Sech 8 in Fahrt- oder Arbeitsrichtung vorgelagert. Im gezeigten Ausführungsbeispiel gilt dies ebenso für die Schneidkante 11.1 der Zusatzsech 11 (vgl. insbesondere Fig. 4). Ein Abstand zwischen der Schneidspitze 11.2 und der Scharspitze 4.4 der Schar 4.2 des Pflugschar-Werkzeugs 4 zwischen etwa 60 cm und etwa 120 cm betragen.

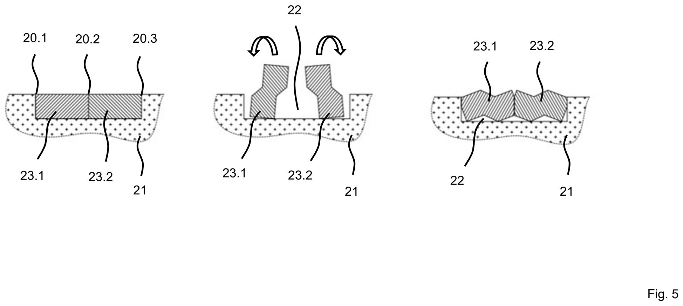

Bei dem Pflug 1 sind zur Ausbildung mittlerer Pflugwerkzeugpaare 3.2, 3.3 die jeweiligen Pflugschar-Werkzeuge 4 in einer V-Anordnung angeordnet (vgl. Fig. 3), derart, dass die jeweiligen Scharspitzen 4.4 nebeneinanderliegend oder aneinanderstoßend angeordnet sind und eine gemeinsame Paarscharspitze ausgebildet ist. Auch für die Zusatzpflugschar-Werkzeuge 5 ist gemäß Fig. 3 eine V-Anordnung gebildet, derart, dass jeweils zwei Zusatzpflugschar-Werkzeuge 5 an einem gemeinsamen Zusatzpflugbalken 7 angeordnet sind. Vergleichbar sind die beiden in der V-Anordnung positionierten Pflugschar-Werkzeuge 4 über einen gemeinsamen Pflugbalken 6 mit dem Rahmenbalken 2 verbunden (vgl. zum Beispiel insbesondere Fig. 1). Im Pflugbetrieb, in welchem der Pflug 1 in Fahrt- oder Arbeitsrichtung A bewegt wird, schneiden die Sech 8 und die Zusatzsech 11 eines Pflugwerkzeugpaares jeweils einen vertikalen Bodenschnitt 20.1, 20.2 im Erdboden 21, was in Fig. 5 schematisch gezeigt ist. Ein weiterer vertikalen Bodenschnitt 20.3 wird von einer benachbarten Zusatzsech erzeugt.

Im Erdboden 21 wird beim Pflügen eine Furche 22 hergestellt. Beim gezeigten Ausführungsbeispiel werden äußere vertikale Bodenschnitte 20.1, 20.3 mittels der Sechen 8 hergestellt, wohingegen der mittlere vertikale Bodenschnitt 20.2 mit Hilfe der Zusatzseche 11 ausgebildet wird. Nachdem die vertikale Bodenschnitte 20.1, 20.2, 20.3 mittels Seche 8 und Zusatzseche 11 hergestellt sind, können ein erster und ein zweiter Boden- oder Erdbalken 23.1, 23.2 mit Hilfe benachbarter Pflugschar-Werkzeuge 5 vom Erdboden 21 getrennt, aufgenommen und gewendet werden. Hierbei werden die aufgenommen Bodenbalken 23.1, 23.2 jeweils in entgegengesetzten Drehrichtungen gewendet (vgl. mittlere Darstellung in Fig. 5) und in entgegengesetzten Verlagerungsrichtungen quer zur Fahrt- oder Arbeitsrichtung A verlagert, nämlich in Bezug auf die Furche 22 nach außen zum Zusatzpflugschar-Werkzeug 5 hin. Dieser Verlagerung wirkt sodann das Zusatzpflugschar-Werkzeug 5 jeweils entgegen, indem der aufgenommene Bodenbalken 23.1, 23.2 entgegengesetzt verlagert wird, um die Bodenbalken 23.1, 23.2 schließlich gemäß der rechten Darstellung in Fig. 5 in der Furche 22 gewendet abzulegen. Auf diese Weise werden die Bodenbalken 23.1, 23.2 jeweils um 180 Grad gewendet und in der Furche 22 im Wesentlichen in dem Bereich der Furche 22 abgelegt, von welchem sie zuvor getrennt wurden.

Das Anordnen eines gewendeten Bodenbalkens 23., 23.2 in der Furche 22 selbst ergibt sich in vergleichbarer Weise aufgrund des paarweisen Zusammenwirkens bei außenliegenden (endseitigen) Pflugwerkzeugpaaren 3.1, 3.4 von Pflugschar-Werkzeug 4 und zugeordnetem Zusatzpflugschar-Werkzeug 5. Hierbei fehlt es an dem mittleren vertikalen Bodenschnitt 20.2. Die äußeren vertikalen Bodenschnitte 20.1, 20.3 werden auch hierbei mittels Sech 8 und Zusatzsech 11 des jeweiligen Pflugwerkzeugpaaren 3.1, 3.4 für nur einen Bodenbalken erzeugt, was eine effiziente und saubere Trennung des Bodenbalkens von dem Erdboden 21 sowie eine möglichst vollständig ausgefüllte Furche 22 nach dem Wenden des Bodenbalkens unterstützt.

Bei dem Pflug 1 kann vorgesehen sein, dass ein vertikaler Abstand der Scharspitze 4.4 der Schar 4.2 des Pflugschar-Werkzeugs 4 zu dem Horizontalabschnitt 6.1 des Pflugbalkens 6 etwa 40 cm bis etwa 90 cm beträgt, insbesondere zwischen der Scharspitze 4.4 und einer Deckfläche des Pflugbalkens 6 im Bereich des Horizontalabschnitts 6.1.

Ein horizontaler Abstand zwischen dem Vertikalabschnitt 6.3 des Pflugbalkens 6 und dem Vertikalabschnitt 7.1 des Zusatzpflugbalkens 7 kann etwa 60 cm bis etwa 90 cm betragen, insbesondere der Abstand zwischen einander gegenüberliegenden Innenseiten von Pflugbalken 6 im Bereich des Vertikalabschnitts 6.3 und Zusatzpflugbalken 7 im Bereich des Vertikalabschnitts 7.1.

Ein Spitzenabstand zwischen der Scharspitze 4.4 der Schar 4.2 des Pflugschar-Werkzeugs 4 und der Scharspitze 5.2 der Schar 5.1 des Zusatzpflugschar-Werkzeugs 5 kann in Fahrt- oder Arbeitsrichtung A etwa 40 cm bis etwa 120 cm betragen. Der Spitzenabstand zwischen der Scharspitze der Schar des Pflugschar-Werkzeugs und der Scharspitze der Schar des Zusatzpflugschar-Werkzeugs kann in Fahrt- oder Arbeitsrichtung etwa 70 cm bis etwa 110 cm betragen, beispielsweise etwa 80 cm bis etwa 100 cm.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Pflug (1), mit einem Rahmenbalken (2), dessen Längsrichtung sich quer zu einer Fahrt- oder Arbeitsrichtung (A) erstreckt, und Pflugwerkzeugpaaren (3.1, ..., 3.4), die in Längsrichtung des Rahmenbalkens (2) nebeneinander angeordnet sind, wobei bei den Pflugwerkzeugpaaren (3.1, ..., 3.4) jeweils Folgendes vorgesehen ist:
- ein Pflugschar-Werkzeug (4), das über einen Pflugbalken mit dem Rahmenbalken (2) verbunden und betreibbar ist, im Pflugbetrieb beim Ausbilden einer Furche (22) im Erdboden (21) einen Bodenbalken zu trennen, aufzunehmen, zu wenden und in einer Verlagerungsrichtung quer zur Fahr- oder Arbeitsrichtung seitlich zu verlagern;
- ein dem Pflugschar-Werkzeug (4) zugeordnetes Zusatzpflugschar-Werkzeug (5), das über einen Zusatzpflugbalken (7) mit dem Rahmenbalken (2) verbunden und betreibbar ist, im Pflugbetrieb den von der Pflugschar-Werkzeug (4) aufgenommenen und gewendeten Bodenbalken entgegengesetzt zur Verlagerungsrichtung quer zur Fahrt- oder Arbeitsrichtung (A) seitlich zu verlagern; und
- eine der Pflugschar-Werkzeug (4) zugeordnete Sech (8), die dem Pflugschar-Werkzeug (4) in Fahrt- oder Arbeitsrichtung (A) vorgelagert und betreibbar ist, einen vertikalen Bodenschnitt für den Bodenbalken herzustellen.

2. Pflug (1) nach Anspruch 1, **dadurch gekennzeichnet, dass** eine Zusatzsech (11) vorgesehen ist, die dem Zusatzpflugschar-Werkzeug (5) zugeordnet und dieser in Fahrt- oder Arbeitsrichtung (A) vorgelagert und betreibbar ist, einen gegenüberliegenden vertikalen Bodenschnitt für den Bodenbalken herzustellen.

3. Pflug (1) nach Anspruch 2, **dadurch gekennzeichnet, dass** eine Schneidkante der Sech (8), die beim Ausbilden des vertikalen Bodenschnitts den Erdboden (21) schneidet, gegenüber einer Schneidkante der Zusatzsech (11), die beim Ausbilden des gegenüberliegenden vertikalen Bodenschnitts den Erdboden (21) schneidet, in Fahrt- oder Arbeitsrichtung (A) zurückversetzt ist.

4. Pflug (1) nach mindestens einem der vorangehenden Ansprüche, **dadurch gekennzeichnet, dass** die Sech (8) und / oder die Zusatzsech (11) mit mindestens einer Sech (8) aus der folgenden Gruppe gebildet sind: Schneidscheiben-Sech und Schneidmesser-Sech.

5. Pflug (1) nach Anspruch 4, **dadurch gekennzeichnet, dass** die Sech (8) mit einer Schneidscheiben-Sech gebildet ist, welche über eine zugeordnete Halteinrichtung (9) mit dem Pflugbalken verbunden ist.

6. Pflug (1) nach Anspruch 4 oder 5, **dadurch gekennzeichnet, dass** die Zusatzsech (11) eine an dem Zusatzpflugbalken (7) angeordnete Schneidmesser-Sech aufweist.

7. Pflug (1) nach Anspruch 6, **dadurch gekennzeichnet, dass** die Schneidmesser-Sech mit dem Zusatzpflugbalken (7) integriert ausgebildet ist, derart, dass eine Schneidkante der Schneidmesser-Sech an einem Balkenabschnitt (7.2) des Zusatzpflugbalkens (7) gebildet ist.

8. Pflug (1) mindestens einem der Ansprüche 4 bis 7, **dadurch gekennzeichnet, dass** eine Schneidkante der Zusatzsech (11) mit Blick von der Seite auf die Pflugwerkzeugpaare (3.1, ..., 3.4) zur Vertikalrichtung geneigt ist und eine bodenseitige Schneidspitze (11.1) der Zusatzsech (11) in Fahrt- oder Arbeitsrichtung (A) vorauseilend angeordnet ist.

9. Pflug (1) nach mindestens einem der vorangehenden Ansprüche, dadurch **gekennzeichne**t, dass der Zusatzpflugbalken (7) mit Blick von der Seite auf die Pflugwerkzeugpaare (3.1, ..., 3.4) einen im Wesentlichen in Horizontalrichtung verlaufenden Balkenabschnitt (7.3) aufweist, an dessen rückseitigem Ende das Zusatzpflugschar-Werkzeug (5) angeordnet ist.

10. Pflug (1) nach mindestens einem der vorangehenden Ansprüche, **dadurch gekennzeichnet, dass** eine Scharspitze (5.2) einer Schar (5.1) des Zusatzpflugschar-Werkzeugs (5) einem in Fahrt- oder Arbeitsrichtung (A) rückseitigen Scharende (4.3) einer Schar (4.2) des Pflugschar-Werkzeugs (4) gegenüberliegend angeordnet ist.

11. Pflug (1) nach mindestens einem der vorangehenden Ansprüche, **dadurch gekennzeichnet, dass** ein vertikaler Abstand einer Scharspitze (4.4) der Schar (4.2) des Pflugschar-Werkzeugs (4) von einem oberen Horizontalabschnitt (6.1) des Pflugbalkens (6) zwischen etwa 40 cm und etwa 90 cm beträgt.

12. Pflug (1) nach mindestens einem der vorangehenden Ansprüche, **dadurch gekennzeichnet, dass** ein horizontaler Abstand eines hinteren Vertikalabschnitts (6.3) des Pflugbalkens (6) von einem vorderen Vertikalabschnitt (7.1) des Zusatzpflugbalkens (7) zwischen etwa 60 cm und etwa 90 cm beträgt.

13. Pflug (1) nach mindestens einem der vorangehenden Ansprüche, **dadurch gekennzeichnet, dass** in der Fahrt- oder Arbeitsrichtung (A) ein Spitzenabstand zwischen der Scharspitze (4.4) der Schar (4.2) des Pflugschar-Werkzeugs (4) und der Scharspitze (5.2) der Schar (5.1) des Zusatzpflugschar-Werkzeugs (5) zwischen etwa 40 cm bis etwa 120 cm beträgt.

14. Pflug (1) nach mindestens einem der vorangehenden Ansprüche, **dadurch gekennzeichnet, dass** zumindest bei einem oder bei mehreren mittleren der Pflugwerkzeugpaare (3.1, ..., 3.4) das Pflugschar-Werkzeug (4) und das Zusatzpflugschar-Werkzeug (5) jeweils paarweise benachbart zueinander in einer V-Anordnung angeordnet sind, derart, dass Scharspitzen (4.4) der Schare (4.2) benachbarter Pflugschar-Werkzeuge (4) einerseits und Scharspitzen (5.2) der Schare (5.1) benachbarter Zusatzpflugschar-Werkzeuge (5) andererseits jeweils eine gemeinsame Paarscharspitze bilden.

15. Verfahren zum Pflügen mit einem Pflug, bei dem an einem Rahmenbalken (2), dessen Längsrichtung sich quer zu einer Fahrt- oder Arbeitsrichtung (A) erstreckt, Pflugwerkzeugpaare (3.1, ..., 3.4) in Längsrichtung des Rahmenbalkens (2) nebeneinander angeordnet sind, die jeweils mit einem Pflugschar-Werkzeug (4), einem dem Pflugschar-Werkzeug (4) zugeordneten Zusatzpflugschar-Werkzeug (5) sowie einer Sech (8) gebildet sind, wobei das Verfahren Folgendes aufweist:
- Schneiden eines vertikalen Bodenschnitts für einen Bodenbalken mittels der Sech (8), die dem Pflugschar-Werkzeug (4) zugeordnet und in Fahrt- oder Arbeitsrichtung (A) vorgelagert ist;
- Trennen des Bodenbalkens vom Erdboden (21) zum Ausbilden einer Furche (22) im Erdboden (21) sowie Aufnehmen, Wenden und seitliches Verlagern des Bodenbalkens quer zur Fahrt- oder Arbeitsrichtung (A) mittels des Pflugschar-Werkzeugs (4), das über einen Pflugbalken (6) mit dem Rahmenbalken (2) verbunden ist; und
- seitliches Verlagern des von dem Pflugschar-Werkzeug (4) aufgenommenen und gewendeten Bodenbalkens entgegengesetzt zur Verlagerungsrichtung quer zur Fahrt- oder Arbeitsrichtung (A) mittels des Zusatzpflugschar-Werkzeugs (5), derart, dass der gewendete Bodenbalken in der Furche (22) abgelegt wird.
